# EUROPEAN PATENT APPLICATION

(11) **EP 4 810 315 A1**
(43) Date of publication of application: **23.09.2026**
(21) Application number: 26164526.1
(22) Date of filing: 13.03.2026
(51) Int. Cl.: B60N 2/22, B60N 2/64

(54) **SEAT FOR A VEHICLE WITH FILLING OF THE SPACE BETWEEN BACKREST AND SEAT CUSHION**

(30) Priority: 17.03.2025 IT 202500005373
(71) Applicant: FERRARI S.p.A., 41100 Modena (IT)
(72) Inventor: TAYLOR, Daniel Martin, 41100 Modena (IT)
(74) Representative: Studio Torta S.p.A.

(57) **Abstract**

A seat (1) for a vehicle having: a base structure (5), which is rigid, is configured to be fixed to a floorboard of the vehicle and is divided into a cushion (2) and a backrest (3) spaced apart from the cushion (2), thus defining a space (8) between the backrest (3) and the cushion (2); an upholstery (6), which is elastically deformable, at least partially covers the base structure (5), constitutes the outermost part of the seat (1) that comes into contact with a body of a passenger of the seat (1) and has at least one component (7) fixed to the base structure (5); and a filling system (9) provided with a filling body (10), which can assume a passive position, in which the filling body (10) is external to the space (8) between the backrest (3) and the cushion (2), and an active position, in which the filling body (10) is in the space (8) between the backrest (3) and the cushion (2).

## Description

### CROSS-REFERENCE TO RELATED APPLICATIONS

This patent application claims priority from Italian patent application no. 102025000005373 filed on March 17, 2025, the entire disclosure of which is incorporated herein by reference.

### TECHNICAL FIELD

The invention relates to a seat for a vehicle.

The invention advantageously applies to a seat of a car, to which explicit reference will be made in the description below without this implying a loss of generality.

### PRIOR ART

The seats are one of the elements of a car that most affects the comfort of passengers, as they constitute the interface through which passengers come into physical contact with the car.

In a high-performance sports car, the weight and dimensions of all components, including the seats, must be reduced to a minimum. For this reason, a seat of a high-performance sports car comprises a rigid base structure (i.e. non-deformable due to the thrust of the body of the passenger sitting on the seat) and an elastically deformable upholstery (i.e. deformable due to the thrust of the body of the passenger sitting on the seat), which is fixed on the base structure, at least partially covers the base structure and constitutes the outermost part of the seat that comes into contact with the body of the passenger sitting on the seat (i.e. constitutes the aesthetic and tactile interface to the outside).

The base structure comprises a seat cushion fixed to a floorboard of the car and a backrest that supports a headrest and is mounted on the cushion in a rotary manner so as to rotate around a horizontal rotation axis and thus vary (adjust) the angle formed between the backrest and the cushion in order to allow the passenger of the seat to find the best position (namely, the position that the passenger of the seat finds most comfortable, also depending on their anthropometric characteristics).

However, some drivers have reported that a seat of the type described above does not have excellent comfort, especially in case of prolonged use (as is the case, for example, during an *"Endurance"* competition).

Patent application GB1229947A discloses a seat for a vehicle, in which the backrest has two fixed side portions and a movable central portion, which can be lifted by means of a rack and pinion mechanism in order to form a headrest; according to alternative embodiments, the central portion of the backrest is flexible and is partially housed under the cushion when it is in a lowered position, or the central portion of the backrest is rigid and, in order to prevent a space from being created between the cushion and the lower end of the central portion when the latter is in a raised position, the side portions of the backrest are associated with a rigid and vertical covering element, which is arranged in front of (and not inside) a space left free by the lower end of the central portion.

### DESCRIPTION OF THE INVENTION

The object of the invention is to provide a seat for a vehicle that is capable of offering high comfort and, at the same time, has a particularly light weight and particularly small dimensions.

According to the invention, there is provided a seat for a vehicle as claimed in the appended claims.

The appended claims describe preferred embodiments of the invention and form an integral part of the description.

### BRIEF DESCRIPTION OF THE DRAWINGS

The invention will now be described with reference to the accompanying drawings showing a non-limiting embodiment thereof, wherein:
- figure 1 is a schematic perspective view of a seat of a car;
- figures 2 and 3 are two schematic side views of the seat of figure 1 with a filling system in two different configurations;
- figures 4 and 5 are two schematic views of the filling system in two different configurations; and
- figures 6 and 7 are two schematic views of a different embodiment of the filling system in two different configurations.

### PREFERRED EMBODIMENTS OF THE INVENTION

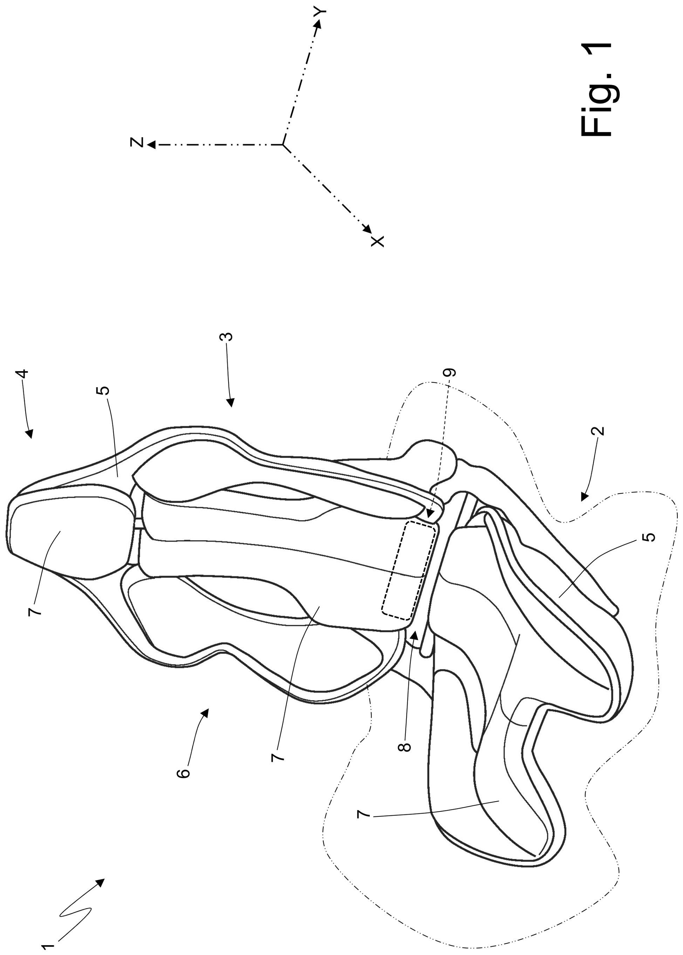

In figure 1, reference number 1 indicates, as a whole, a seat of a car.

The seat 1 is divided into a seat cushion 2 having a substantially horizontal arrangement (namely, lying in a plane defined by the longitudinal direction X that is parallel to the direction of travel of the vehicle and by the transverse direction Y that is transverse to the direction of travel of the vehicle) and into a backrest 3 having a substantially vertical arrangement (namely, lying in a plane defined by the vertical direction Z and by the transverse direction Y). Together, the cushion 2 and the backrest 3 give the seat 1 an "L" shape. Above the backrest 3 there is a headrest 4, namely the backrest 3 ends, at the top, with the headrest 4.

From a constructive point of view, the seat 1 comprises a base structure 5, which is rigid (namely, non-deformable due to the thrust of the body of the passenger sitting on the seat 1) and is configured to be fixed to a floorboard (schematically shown with a dash-dotted line) of the car. As a consequence, the base structure 5 comprises the cushion 2, the backrest 3 and the headrest 4; namely, the base structure 5 is divided into the cushion 2, the backrest 3 and the headrest 4. The backrest 3 of the base structure 5 is mounted in a movable manner with respect to the cushion 2 of the base structure 5 in order to be able to change the mutual position; in particular, the cushion 2 of the base structure 5 is fixed to the floorboard of the car, while the backrest 3 of the base structure 5 is mounted in a rotary manner on the cushion 2 of the base structure 5 in order to rotate around a horizontal rotation axis (oriented transversely, namely parallel to the transverse axis Y) and thus vary (adjust) the angle formed between the backrest 3 of the base structure 5 and the cushion 2 of the base structure 5. The adjustment of the angle of the backrest 3 of the base structure 5 with respect to the cushion 2 of the base structure 5 allows the passenger of the seat 1 to find the best position (namely, the position that the passenger of the seat 1 finds most comfortable, also depending on their anthropometric characteristics).

Furthermore, the seat 1 comprises an upholstery 6, which is elastically deformable (namely, deformable due to the thrust of the body of the passenger sitting on the seat 1), is fixed on the base structure 5, at least partially covers the base structure 5 and constitutes the outermost part of the seat 1 that comes into contact with the body of the passenger sitting on the seat 1, i.e. constitutes the aesthetic and tactile interface to the outside.

In the embodiment shown in figure 1, the upholstery 6 comprises a series of components 7, which are fixed to the base structure 5. According to a possible embodiment, the components 7 of the upholstery 6 are removable (replaceable), namely they are fixed to the base structure 5 in a detachable manner by means of a coupling system (known and not shown) so as to be interchangeable. For example, the coupling system comprises, for each component 7 of the upholstery 6, a first fixing element integral to the base structure 5 and a second fixing element, which is configured to be coupled to the first fixing element and is integral to the component 7.

According to an alternative embodiment which is not shown herein, the upholstery 6 has a *"traditional"* configuration and is therefore non-removable and completely covers the base structure 5 without leaving any part of the base structure 5 in sight.

By way of example, the base structure 5 could be made of a composite material (for example, containing carbon fibres). Alternatively, the base structure 5 could be net-like and be built with 3D printers (namely, with additive manufacturing).

In order to allow the backrest 3 to rotate with respect to the cushion 2, the backrest 3 is spaced apart from the cushion 2, thus defining a space 8 between the backrest 3 and the cushion 2. Namely, between a lower wall of the backrest 3 and an upper wall of the cushion 2 there is the space 8, which separates the lower wall of the backrest 3 from the upper wall of the cushion 2.

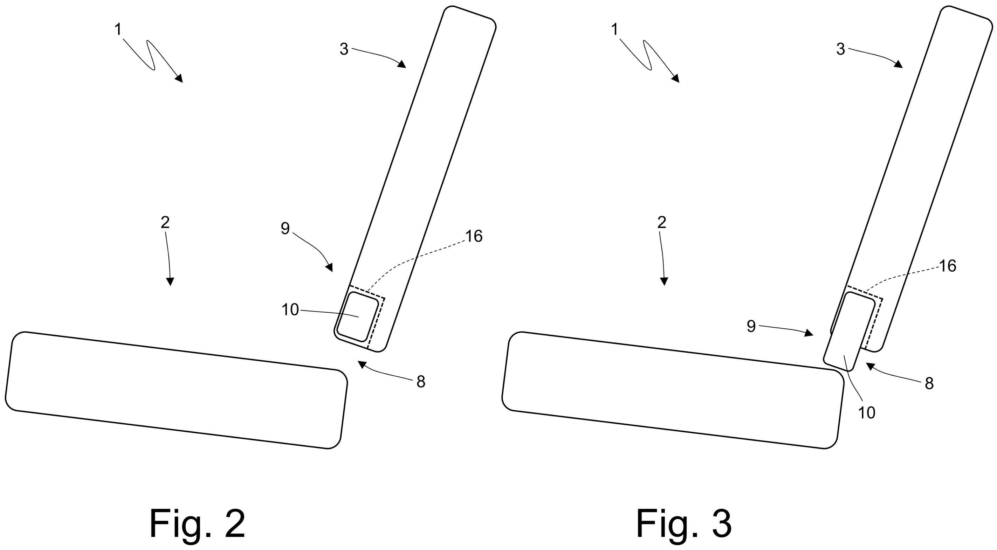

The seat 1 comprises a filling system 9 provided with a filling body 10 (shown in figures 3-7), which can assume a passive position (shown in figures 2, 4 and 6), in which the filling body 10 is external to the space 8 between the backrest 3 and the cushion 2 (namely, it does not occupy the space 8), and an active position (shown in figures 3, 5 and 7), in which the filling body 10 is in the space 8 between the backrest 3 and the cushion 2, (namely, it occupies and fills the space 8). In other words, in the passive position, the filling body 10 does not occupy the space 8, which is therefore empty (in this condition, it is possible to rotate the backrest 3 with respect to the cushion 2, as there are no obstacles); on the other hand, in the active position, the filling body 10 (at least partially) occupies and fills the space 8, which is therefore no longer (completely) empty (in this condition, it is not possible to rotate the backrest 3 with respect to the cushion 2, as the rotation is hindered by the filling body 10).

According to a preferred embodiment, when the filling body 10 is in the active position, a front surface of the filling body 10 is substantially aligned with (coplanar to) a front surface of the cushion 2 to constitute a natural seamless extension of the cushion 2.

According to a preferred embodiment, the front surface of the filling body 10 supports (at least) a component 7 (preferably with a limited thickness) of the upholstery 6 to constitute, also from an aesthetic and tactile point of view, a natural seamless extension of the cushion 2.

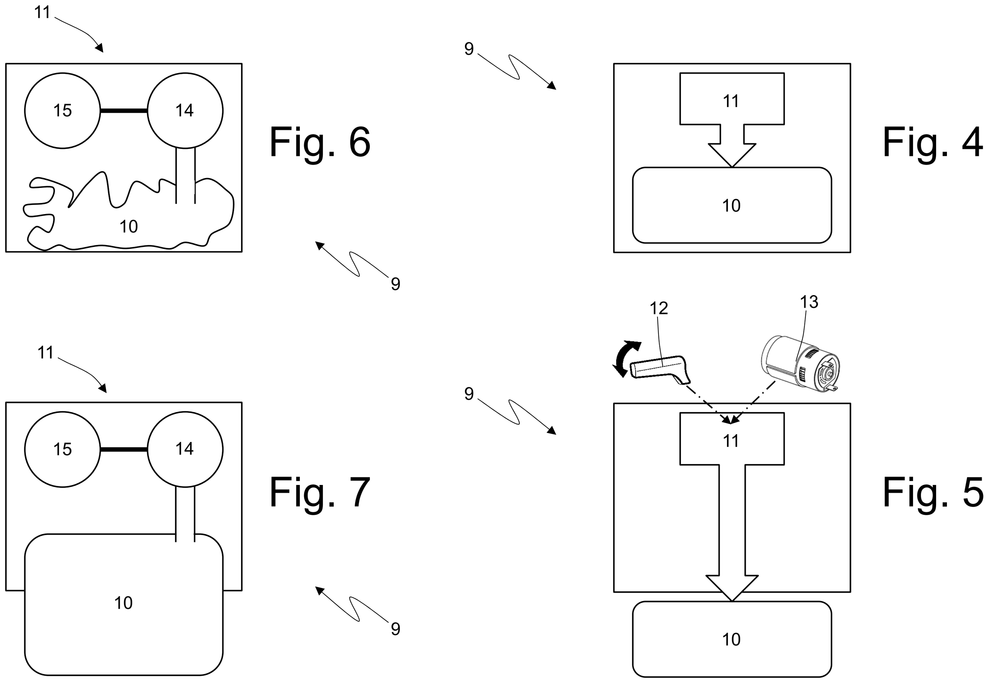

According to figures 4-7, the filling system 9 comprises an actuator device 11 configured to alternately move the filling body 10 to the passive position or to the active position.

In the embodiment shown in figures 4 and 5, the filling body 10 has the same shape and the same size both in the passive position and in the active position; namely, the filling body 10 has a stable shape and size that are not modified in use. In this embodiment, the actuator device 11 is configured to move the filling body 10 between the active position and the passive position, preferably (but not necessarily) by means of a linear translation, without deforming the filling body 10. For example, the filling body 10 is carried by a slide that can slide along (at least) a guide due to the thrust of the actuator device 11. In this embodiment, the actuator device 11 can entail a manual operation by means of a control (for example, a lever 12) that can be gripped and is located on a side of the seat 1, or it can comprise an electric motor 13 connected to the filling body 10 by means of a ring gear-pinion coupling).

In the embodiment shown in figures 6 and 7, the filling body 10 does not have a stable shape and size and therefore changes its shape and size in use. In particular, the filling body 10 inflates to increase its size in the active position and deflates to decrease its size in the passive position. According to a preferred embodiment, the filling body 10 comprises an impermeable bag and the actuator device 11 comprises a pneumatic pump 14, which is operated by an electric motor 15, is connected to the bag and is configured to introduce compressed air into the bag in order to move the filling body 10 to the active position and to suck air from the bag in order to move the filling body 10 to the passive position.

In the embodiment shown in figures 2 and 3, the backrest 3 comprises a recess 16 configured to house the filling body 10 when it is in the passive position and, therefore, the filling body 10 comes out of the recess 16 of the backrest 3, moving towards the cushion 2, when it assumes the active position. According to a different embodiment which is not shown herein, the cushion 2 (instead of the backrest 3) comprises the recess 16 configured to house the filling body 10 when it is in the passive position and, therefore, the filling body 10 comes out of the recess 16 of the cushion 2, moving towards the backrest 3, when it assumes the active position.

According to a possible embodiment, the filling system 9 is configured to prevent the backrest 3 from rotating relative to the cushion 2 when the filling body 10 is in the active position; in this way, the passenger of the seat is prevented from trying to rotate the backrest 3 relative to the cushion 2 when the filling body 10 is in the active position, as they would not be able to perform the operation due to the presence of the filling body 10 in the space 8 between the backrest 3 and the cushion 2 and could risk damaging the filling body 10 by unnecessarily crushing it between the backrest 3 and the cushion 2.

According to a preferred embodiment, the filling system 9 is configured to operate a mechanical block for blocking the rotation of the backrest 3 relative to the cushion 2 when the filling body 10 is in the active position; in other words, the same action that moves the filling body 10 to the active position also operates the mechanical block for blocking the rotation of the backrest 3 relative to the cushion 2.

According to an alternative embodiment, the actuator device 11 is configured to hold the filling body 10 in the active position with a limited (calibrated) force so that the filling body 10 is pushed (without damages) towards the passive position by the rotation of the backrest 3 relative to the cushion 2 when the filling body 10 is in the active position. Namely, if the passenger of the seat 1 tries to rotate the backrest 3 with respect to the cushion 2 when the filling body 10 is in the active position, the rotation of the backrest 3 is possible as it pushes (without damages) the filling body 10 towards the passive position; however, it is always preferable that, in order to rotate the backrest 3 with respect to the cushion 2, the filling body 10 is in the passive position, as pushing the filling body 10 towards the passive position through the rotation of the backrest 3 requires applying, for the rotation of the backrest 3, a force that is considerably greater than the force necessary to rotate the backrest 3 when the filling body 10 already is in the passive position.

According to a preferred embodiment, the seat 1 comprises a control configured to adjust the rotation of the backrest 3 relative to the cushion 2 and located on one side of the seat 1 and another control configured to control the filling system 9 and located on the other side of the seat 1.

Summing up what has been described above, the passenger of the seat 1 normally keeps the filling body 10 in the active position so as to *"close"* the space 8 between the backrest 3 and the cushion 2 in such a way that there is continuity between the end of the backrest 3 and the beginning of the cushion 2 (namely, between the lower wall of the backrest 3 and the upper wall of the cushion 2). Only when the passenger of the seat 1 wants to change the inclination of the backrest 3 relative to the cushion 2, the passenger of the seat 1 temporarily moves the filling body 10 from the active position to the passive position (thus freeing the space 8 between the backrest 3 and the cushion 2) for the time necessary to adjust the inclination of the backrest 3 relative to the cushion 2; once the adjustment of the inclination of the backrest 3 relative to the cushion 2 has been completed, the passenger of the seat 1 returns the filling body 10 from the passive position to the active position.

Owing to the above, it is evident that the backrest 3 is arranged at a constant distance from the cushion 2, namely it is not able to get closer to the cushion 2 or move away from the cushion 2, and the space 8 between the backrest 3 and the cushion 2 always has the same volume. As a matter of fact, the rotation of the backrest 3 relative to the cushion 2 does not change the size and the conformation of the space 8 between the backrest 3 and the cushion 2.

It should be pointed out that the seat 1 can be a single seat located in a front position or located in a rear position.

The embodiments described herein can be combined with one another.

The seat 1 described above has numerous advantages.

First of all, the seat 1 disclosed above offers excellent comfort. This result is obtained thanks to the presence of the filling system 9, which, during the normal use of the seat 1, *"fills"* the space 8 between the backrest 3 and the cushion 2 in such a way that there is continuity between the end of the backrest 3 and the beginning of the cushion 2 (namely, between the lower wall of the backrest 3 and the upper wall of the cushion 2). As a matter of fact, by *"filling"* the space 8 between the backrest 3 and the cushion 2, it is possible to obtain a more even distribution (therefore, more pleasant and less tiring) of the pressure along the back of the passenger of the seat 1.

The positive action of the filling system 9 is particularly noticeable in the seat 1 of a high-performance sports car, in which the angle of the backrest 3 relative to the cushion 2 is generally wide (namely, the backrest 3 is very reclined) and therefore greater pressure is exerted upon the lower part of the back of the passenger of the seat 1.

Furthermore, the seat 1 described above maintains the possibility of adjusting the inclination of the backrest 3 relative to the cushion 2 by rotating the backrest 3 relative to the cushion 2. As a matter of fact, the rotation of the backrest 3 relative to the cushion 2 requires a separation between the backrest 3 and the cushion 2 (namely, it requires the empty space 8 between the backrest 3 and the cushion 2) and this separation is *"filled"* only when the backrest 3 is not rotated relative to the cushion 2.

Finally, the seat 1 disclosed above also has a minimal increase in weight and does not have any increase in overall dimensions compared to a similar seat without the filling system 9.

### LIST OF THE REFERENCE NUMBERS OF THE FIGURES

- 1: seat
- 2: cushion
- 3: backrest
- 4: headrest
- 5: base structure
- 6: upholstery
- 7: components
- 8: space
- 9: filling system
- 10: filling body
- 11: actuator device
- 12: lever
- 13: electric motor
- 14: pneumatic pump
- 15: electric motor
- 16: recess
- X: longitudinal direction
- Y: transverse direction
- Z: vertical direction

## Claims

1. A seat (1) for a vehicle comprising:
a base structure (5), which is rigid, is configured to be fixed to a floorboard of the vehicle and is divided into a cushion (2) and a backrest (3) spaced apart from the cushion (2), thus defining a space (8) between the backrest (3) and the cushion (2);
an upholstery (6), which is elastically deformable, at least partially covers the base structure (5), constitutes the outermost part of the seat (1) that comes into contact with a body of a passenger of the seat (1) and has at least one component (7) fixed to the base structure (5);
a filling system (9) provided with a filling body (10), which can assume a passive position, in which the filling body (10) is external to the space (8) between the backrest (3) and the cushion (2), and an active position, in which the filling body (10) is in the space (8) between the backrest (3) and the cushion (2), namely it at least partially occupies and fills the space (8);
the seat (1) is **characterized in that** the filling system (9) comprises an actuator device (11) configured to alternately move the filling body (10) to the passive position or to the active position.

2. The seat (1) according to claim 1, wherein the actuator device (11) entails a manual operation by means of a control that can be gripped and is located on a side of the seat (1).

3. The seat (1) according to claim 1, wherein the actuator device (11) comprises an electric motor (13; 15).

4. The seat (1) according to claim 1, 2 or 3, wherein the actuator device (11) is configured to move, in particular translate, the filling body (10) between the active position and the passive position.

5. The seat (1) according to claim 4, wherein the filling body (10) has the same shape and the same size both in the passive position and in the active position.

6. The seat (1) according to claim 1, 2 or 3, wherein the filling body (10) inflates to increase its size in the active position and deflates to decrease its size in the passive position.

7. The seat (1) according to claim 6, wherein the filling body (10) comprises an impermeable bag and the actuator device (11) comprises a pneumatic pump (14), which is connected to the bag and is configured to introduce compressed air into the bag in order to move the filling body (10) to the active position and to suck air from the bag in order to move the filling body (10) to the passive position.

8. The seat (1) according to one of the claims from 1 to 7, wherein the backrest (3) comprises a recess (16) configured to house the filling body (10) when it is in the passive position and, therefore, the filling body (10) comes out of the recess (16) of the backrest (3), moving towards the cushion (2), when it assumes the active position.

9. The seat (1) according to one of the claims from 1 to 7, wherein the cushion (2) comprises a recess (16) configured to house the filling body (10) when it is in the passive position and, therefore, the filling body (10) comes out of the recess (16) of the cushion (2), moving towards the backrest (3), when it assumes the active position.

10. The seat (1) according to one of the claims from 1 to 9, wherein:
the backrest (3) is mounted so as to rotate relative to the cushion (2) in order to rotate around a rotation axis; and
the filling system (9) is configured to prevent the backrest (3) from rotating relative to the cushion (2) when the filling body (10) is in the active position.

11. The seat (1) according to claim 10, wherein the filling system (9) is configured to operate a mechanical block forbidding the rotation of the backrest (3) relative to the cushion (2) when the filling body (10) is in the active position.

12. The seat (1) according to one of the claims from 1 to 9, wherein:
the backrest (3) is mounted so as to rotate relative to the cushion (2) in order to rotate around a rotation axis; and
the actuator device (11) is configured to hold the filling body (10) in the active position with a limited force so that the filling body (10) can be pushed towards the passive position by the rotation of the backrest (3) relative to the cushion (2) when the filling body (10) is in the active position.

13. The seat (1) according to claim 10, 11 or 12 and comprising a first control configured to adjust the rotation of the backrest (3) relative to the cushion (2) and located on one side of the seat (1) and a second control configured to control the filling system (9) and located on the other side of the seat (1).

14. The seat (1) according to one of the claims from 1 to 13, wherein, when the filling body (10) is in the active position, a front surface of the filling body (10) is aligned with a front surface of the cushion (2) to constitute a seamless extension of the cushion (2).

15. The seat (1) according to one of the claims from 1 to 14, wherein a front surface of the filling body (10) supports at least one component (7) of the upholstery (6).

16. The seat (1) according to one of the claims from 1 to 15, wherein the backrest (3) is arranged at a constant distance from the cushion (2), namely it is not able to get closer to the cushion (2) or move away from the cushion (2), and the space (8) between the backrest (3) and the cushion (2) always has the same volume.
